# EUROPEAN PATENT APPLICATION

(11) **EP 1 431 801 A2**
(43) Date of publication of application: **23.06.2004**
(21) Application number: 03017115.1
(22) Date of filing: 28.07.2003
(51) Int. Cl.: G02F 1/025

(54) **Integrated optical apparatus**

(30) Priority: 17.12.2002 KR 2002080665
(71) Applicant: SAMSUNG ELECTRONICS CO., LTD., Suwon-City, Kyungki-do (KR)
(72) Inventor: Cho, Shi-Yun, Samsung Electronics Co., Ltd., Suwon-city, Kyungki-do (KR); Kang, Byung-Kwon, Samsung Electronics Co., Ltd., Suwon-city, Kyungki-do (KR)
(74) Representative: Grünecker, Kinkeldey, Stockmair & Schwanhäusser Anwaltssozietät

(57) **Abstract**

An integrated optical apparatus is disclosed that integrates at least two optical devices and can achieve electrical and optical insulation between the optical devices. The integrated optical apparatus includes at least two optical devices both equipped with an optical waveguide, and at least one inner window interposed at a region of the optical waveguide between the optical devices. The inner window disconnects the optical waveguides that are located between the optical devices in order to achieve optical/electrical insulation. According to aspects and embodiments of the present invention, production costs can be reduced because it is not required to employ an independent optical isolator separately in order to achieve optical insulation between the respective optical devices, and process times can be reduced because it is not necessary to control an optical coupling between the optical devices.

## Description

The present invention relates to an integrated optical apparatus including at least two optical devices, more particularly to an integrated optical apparatus, in which electrical and optical insulation is achieved between the optical devices.

In conventional systems, a wave band at 1550 nm of an optical fiber is employed in optical communications in order to transfer ultra high-speed optical signals above 10G bps. A distributed-feedback laser diode (DFB LD) coupled to an electro-absorption optical modulator may be used to fabricate an optical transferring system. Although, when an electro-absorption modulated laser (EML) is used, long-distance transferring of the optical signals may be difficult due to low optical output. As a result, one suggested solution to this problem in the prior art is the integration of a semiconductor optical amplifier (SOA) in order to increase the optical output.

In such integrated devices, the electrical insulation and optical insulation between the semiconductor optical amplifier and the electro-absorption optical modulator or the distributed-feedback laser diode are important factors that determine performance capacities of the integrated devices.

In this regard, using conventional technology, in order to achieve optical and electrical insulations between the optical devices at least two devices have been fabricated: first independently to achieve electrical insulation between the optical devices, and second separate optical isolators have been interposed between the optical devices to achieve optical insulation

However, there are several shortcomings associated with this conventional technology. First, since separate optical isolators are employed, the production costs are increased. Second, optical coupling efficiency decreases during the process of interposition of the optical isolators between the separate optical devices in order to reduce the optical output. In addition, it may be necessary to design special structures in order to increase the coupling efficiency, thereby requiring much time and cost to fabricate the integrated optical products. In practice, the coupling efficiencies of the optical devices are very diversely distributed Third, with regard to devices employing separate optical devices and optical isolators, tolerances with respect to the external environment produced at the respective optical devices and optical isolators have become very large, thereby reducing the reliability of the device output upon the external environment.

Accordingly there is a need in the art for an integrated optical apparatus in which improved optical insulation is achieved between the optical devices.

It is the object of the present invention to provide an integrated optical apparatus which contains optical isolators, which allow for the simultaneous incorporation of optical devices and optical isolators during the integration of the optical devices without the necessity of fabricating them separately.

This object is solved by the subject matters of the independent claims.

Preferred embodiments are defined in the dependent claims.

One embodiment of the present invention is directed to an integrated optical apparatus including: at least two optical devices each equipped with an optical waveguide, and inner windows interposed at regions including the optical waveguides between the optical devices. The inner windows disconnect the optical waveguides that are located between the optical devices in order to achieve optical/electrical insulation.

In another embodiment, the optical insulation between the optical devices can be controlled by the length of the inner window.

In another embodiment, the inner window may be filled with a semiconductor material after removing the optical waveguides.

In another embodiment, the inner window may be filled with an air layer after removing the optical waveguides.

In another embodiment, the electrical insulation between the optical devices can be controlled by the electrical conductivity of the material constituting the inner window.

In another embodiment, the material used to form the inner window is a semiconductor, and the electrical conductivity can be controlled by the doping concentration of a dopant.

In another embodiment, the optical devices include a laser diode and a semiconductor optical amplifier, and the optically insulated inner window is formed between the laser diode and the semiconductor optical amplifier.

In another embodiment, the laser diode may be a distributed feedback laser diode integrated with an electro-absorption optical modulator.

The above features and advantages of the present invention will be more apparent from the following detailed description taken in conjunction with the accompanying drawings, in which:
junction with the accompanying drawings, in which:
FIG. 1 is a diagram illustrating principles of optical insulation for an integrated optical apparatus according to aspects of the present invention;
FIG. 2 is a diagram showing an example of an integrated optical apparatus according to a preferred embodiment of the present invention;
FIG. 3 is a chart showing calculated results of a coupling efficiency (dB) according to an inner window length according to aspects of the present invention and the coupling efficiency (E) obtained from an actual manufactured device.

Hereinafter, a preferred embodiment of the present invention will be described in detail with reference to the accompanying drawings. In the drawings, the same element, although depicted in different drawings, will be designated by the same reference numeral or character, and in the following description of the present invention, a detailed description of known functions and configurations incorporated herein will be omitted when it may obscure the subject matter of the present invention.

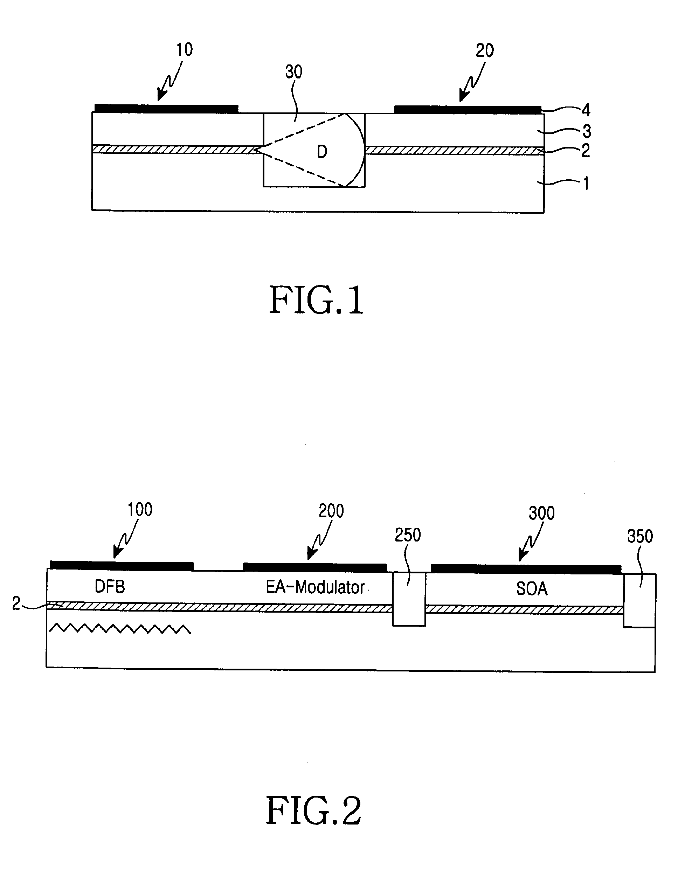

FIG. 1 is a diagram illustrating principles of optical insulation for an integrated optical apparatus according to aspects of the present invention.

As shown in FIG. 1, an integrated optical apparatus includes a first optical device 10, a second optical device 20 and an inner window 30 interposed between the first and second. A plurality of material layers forms the optical devices 10 and 20. The material layers are formed on a substrate 1 and have a structure that commonly includes an optical waveguide 2. The optical waveguide 2 is preferably covered with a cladding layer 3. Element 4 in Fig. 1 represents an electrode. Since these material layers should be known to one of ordinary skill in the art, a detailed description of the constituting material layers of the optical devices 10 and 20 is omitted.

The inner window 30 is interposed at a portion removed of the optical waveguide 2 between the optical devices 10 and 20 and the inner window 30 insulates the optical devices 10 and 20 optically and electrically.

First, the electrical insulation is achieved through controlling the electric conductivity of the materials constituting the inner window 30. In the case of semiconductor material, it is practically controlled through controlling the doping concentration of the dopant.

Regarding optical waveguiding principles, it is noted that an optical mode present in an inner part of a semiconductor device is confined by the optical waveguide produced from differences of refractive indices. The optical confinement thus produced enables the activation of the semiconductor device. In the case of lasers, the optical confinement enables the lasers to oscillate, and in the case of the optical modulators, it enables them to absorb light in order to produce modulated signals. In the case of semiconductor optical amplifiers, it enables the increase of optical amplifying efficiency.

Referring again to FIG. 1, lights confined at the first optical device 10 diverge at the inner window 30 that has been removed from the optical waveguide. The efficiency of the diverging light passing through the inner window 30 couple again with the optical waveguide present at the second optical device 20 in attenuated, thereby achieving optical coupling (optical loss) between the respective devices, e.g., achieving optical insulation. In this regard, the coupling efficiency or the amounts of the optical insulation can be controlled by the length of the inner window 30.

As described above, the technical principle of the inner window 30 is to remove the common optical waveguide 2 between the two devices 10 and 20.The inner window 30 can be constituted in various ways, as described below.

First, the optical waveguide 2 between the two devices 10and 20 can simply be removed. In this case, a portion where the optical waveguide has been removed is filled with air.

Second, the optical waveguide 2 between the two devices 10 and 20 is removed, and the portion where the optical waveguide has been removed is filled with some material. In the case of the semiconductor device, it can be substantially filled by regrowing a lower layer of the semiconductor device.

Finally, other materials may be added to a portion of the optical waveguide between the two devices to thereby be able to achieve optical insulation.

FIG. 2 is a diagram showing an example of an integrated optical apparatus according to a preferred embodiment of the present invention.

As shown in FIG. 2, the integrated optical apparatus includes a distributed-feedback laser diode (DFB LD) 100, an electro-absorption optical modulator (EA-Modulator) 200, a semiconductor optical amplifier (SOA) 300 and two inner windows 250 and 350. The above three devices all include optical waveguides 2, and the inner windows 250 and 350 are interposed between the devices requiring the optical/electrical insulations after the optical waveguides 2 have been removed. Detailed description of the material layers constituting the optical devices 100, 200 and 300 as already referred to with regard to FIG. 1 has been omitted for clarity.

Light confined at the optical waveguide located at the side of the electro-absorption optical modulator 200 diverges at the inner window 250 where the optical waveguide 2 has been removed the optical waveguide. The efficiency of the diverging light passing through the inner window 250 couple again with the optical waveguide 2 present at the semiconductor optical amplifier 300 and is attenuated, thereby achieving optical insulation between the electro-absorption optical modulator 200 and the semiconductor optical amplifier 300. In this regard, the coupling efficiency, i.e., the amounts of the optical insulation, can be controlled by a length of the inner windows 250 and 350.

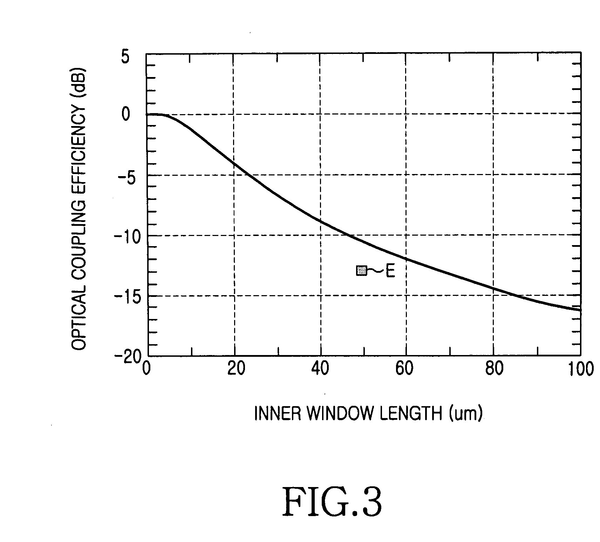

FIG 3 is a chart showing calculated results of coupling efficiency (dB) according to an inner window length of the present invention and the coupling efficiency (E) obtained from the actual manufactured device shown in FIG. 2. As apparent from FIG. 3, optical insulation reaching 15 dB can be produced between the two integrated optical devices.

An integrated optical apparatus according to aspects/embodiments of the present invention can be obtained by removing the optical waveguides between the respective optical devices at the time of integrating optical devices having independent characteristics, and interposing the inner windows there between to achieve optical/electrical insulations.

This is advantageous because it can obviate the difficulties of manufacturing the respective optical devices separately and can reduce the manufacturing process and times.

In addition, it can obviate the necessity of additional design considerations, such as a change of structure in the optical waveguide in order to increase the optical coupling efficiency.

Finally, it can reduce production costs because a separate optical isolator is not required to achieve optical insulation between the respective optical devices, and it can reduce times for manufacturing because it is not necessary to control the optical coupling between the optical devices.

Although preferred embodiments of the present invention have been described for illustrative purposes, those skilled in the art will appreciate that various modifications, additions and substitutions are possible, without departing from the scope of the invention as disclosed in the accompanying claims.

## Claims

1. An integrated optical apparatus comprising:
at least two optical devices, each of which includes an optical waveguide; and
at least one inner window interposed between the optical devices to form a gap between the optical waveguides of the at least two optical devices.

2. The integrated optical apparatus as claimed in claim 1, wherein the at least one inner window functions to achieve optical/electrical insulation between the at least two optical devices.

3. The integrated optical apparatus as claimed in claim 2, wherein the optical insulation between the at least two optical devices can be controlled by a length of the at least one inner window.

4. The integrated optical apparatus as claimed in claim 1 or 2, wherein the inner window is filled with a semiconductor material.

5. The integrated optical apparatus as claimed in one of claims 1 to 4, wherein the inner window is filled with air.

6. The integrated optical apparatus as claimed in claim 2 or 3, wherein the electrical insulation between the at least two optical devices can be controlled by an electric conductivity of a material constituting the at least one inner window.

7. The integrated optical apparatus as claimed in claim 2 or 6, wherein the material constituting the inner window is a semiconductor, and the electric conductivity can be controlled by a doping concentration of a dopant of the semiconductor.

8. The integrated optical apparatus as claimed in one of claims 1 to 7, wherein the at least two optical devices are a laser diode and a semiconductor optical amplifier, and the at least one inner window is formed between the laser diode and the semiconductor optical amplifier.

9. The integrated optical apparatus as claimed in claim 8, wherein the laser diode is a distributed feedback laser diode integrated with an electro-absorption optical modulator.

10. A method of forming an integrated optical apparatus comprising the step of:
forming at least two optical devices, each including a common optical waveguide; and
removing a portion of the common optical waveguide that is located between the at least two optical devices, wherein the removed portion forms an inner window that functions to achieve optical/electrical insulation between the at least two optical devices.

11. The method as claimed in claim 10, further comprising the step of adjusting the optical insulation between the at least two optical devices by controlled by a length of the removed portion.

12. The method as claimed in claim 10 or 11, further comprising the step of filling the inner window with a semiconductor material.

13. The method as claimed in claim 10 or 11, further comprising the step of filling the inner window with air.

14. The method as claimed in one of claims 10 to 12, further comprising the step of adjusting the electrical insulation between the at least two optical devices by controlling by an electric conductivity of the semiconductor material used to fill the inner window.

15. The method as claimed in claim 14, wherein the electric conductivity is controlled by a doping concentration of a dopant of the semiconductor material.

16. The method as claimed in one of claims 10 to 15, wherein the at least two optical devices are a laser diode and a semiconductor optical amplifier, and the inner window is formed between the laser diode and the semiconductor optical amplifier.

17. The method as claimed in claim 16, wherein the laser diode is a distributed feedback laser diode integrated with an electro-absorption optical modulator.
